# EUROPÄISCHE PATENTSCHRIFT

(11) **EP 0 499 680 B1**
(45) Veröffentlichungstag und Bekanntmachung des Hinweises auf die Patenterteilung: **15.11.1995**
(21) Anmeldenummer: 91105109.2
(22) Anmeldetag: 30.03.1991
(51) Int. Cl.: A61C 13/225, A61C 13/275

(54) **Zahnkrone und starres Verbindungselement zur Befestigung einer herausnehmbaren Zahnprothese**
Tooth crown and rigid connecting element for fastening a removable dental prosthesis
Couronne dentaire et élément de fixation rigide pour fixer une prothèse dentaire amovible

(30) Priorität: 22.02.1991 DE 9102106 U
(43) Veröffentlichungstag der Anmeldung: 26.08.1992
(73) Patentinhaber: Obersat, Adam, 67618 Kaiserslautern (DE)
(72) Erfinder: Obersat, Adam, 67618 Kaiserslautern (DE)
(74) Vertreter: Patentanwälte Möll und Bitterich

(56) Entgegenhaltungen:
- EP-A- 0 136 671
- EP-A- 0 347 574
- DE-A- 3 540 049

## Beschreibung

Die Erfindung betrifft eine Zahnkrone für die Befestigung einer herausnehmbaren Prothese mittels eines starren Verbindungselementes nach Art eines parallelwandigen Teleskops, das starre Verbindungselement selbst sowie einen Keramikkern zur Herstellung einer derartigen Zahnkrone gemäß den Oberbegriffen der Ansprüche 1, 16 und 19.

Die prothetische Versorgung eines Lückengebisses ist möglich mit festsitzendem oder mit herausnehmbarem Zahnersatz. Die vorliegende Erfindung befaßt sich mit herausnehmbarem Zahnersatz.

Durch den herausnehmbaren Zahnersatz werden verlorengegangene Zähne ersetzt. Die Teilprothese wird am Restgebiß verankert, so daß die Kaukräfte auf die Restzähne und das Tegument verteilt werden. Eine Teilprothese setzt sich aus drei Elementen zusammen, den künstlichen Zähnen, der Prothesenbasis und den Konstruktionselementen. Zu den Konstruktionselementen zählt man die Ausgleichs- und die Verbindungselemente. Bei den Verbindungselementen unterscheidet man Halteelemente, resiliente Verbindungselemente, scharnierartige Verbindungselemente und starre Verbindungselemente. Die vorliegende Erfindung befaßt sich mit starren Verbindungselementen.

Starre Verbindungselemente besitzen keinen Freiheitsgrad zwischen Matrize und Patrize. Sie erfüllen dadurch in jedem Fall Stütz-, Führungs- und Kippmeiderfunktion. Die Stützfunktion wird durch einen Tiefenanschlag hergestellt. Die Führungsfunktion wird durch parallelisierte Flächen zwischen Matrize und Patrize erreicht, die auch die Kippmeiderfunktion aufbauen.

Haltewirkung entsteht entweder durch Friktion zwischen Matrize und Patrize oder durch ein zusätzliches aktives oder passives Halteelement. Beruht die Haltewirkung auf Friktion zwischen Matrize und Patrize, kann sie bei Bedarf durch Angleichung der Passung von Matrize und Patrize wiederhergestellt werden. Man spricht dann von aktiv aktivierbaren Verbindungselementen. In anderen Fällen müssen Patrize und/oder Matrize ausgewechselt werden, um die Haltewirkung wiederherzustellen. Man spricht dann von passiv aktivierbaren Verbindungselementen.

Starre Verbindungselemente zerfallen in Stege, Geschiebe und Doppelkronen oder Teleskope.

Doppelkronen als starre Verbindungselemente erfüllen Stütz-, Halte-, Führungs-, Kippmeider- und Schubverteilungsfunktion. Die Haltewirkung bei parallelwandigen Teleskopen wird durch Reibung zwischen dem Primär- und Sekundärteil hergestellt. Da bei parallelwandigen Teleskopen ein Friktionsverlust zu beobachten ist, werden zusätzlich aktive oder passive Halteelemente notwendig, besonders im Oberkiefer. Geeignet sind Friktionsstifte, Riegel, Kugelfedern oder Druckknöpfe. Diese zusätzlichen Halteelemente sollen verhindern, daß die unbelastete Prothese sich von selbst löst.

Bei den Teleskopen mit parallelisierter Wandung unterscheidet man geschlossene, offene und Teil-Teleskope. Teleskope mit konischer Wandung, sogenannte Konuskronen, werden nur in geschlossener Form angewendet.

Teil-Teleskope, auch als Rillen-Schulter-Teleskope oder Rillen-Schulter-Stift-Teleskope bezeichnet, werden besonders bei der Versorgung der Frontzähne und Prämolaren angewendet. Der linguale Anteil der Primärkrone wird mit einer Rillen-Schulter-Fräsung versehen, die linguale Zahnform wird durch das Außenteleskop hergestellt. Der Vorteil der Teil-Teleskope liegt darin, daß bei Herausnahme der Prothese das verblendete Primärteleskop weiterhin sichtbar ist, die Ästhetik also durch die goldene Primärkrone nicht beeinträchtigt wird, wie es bei den Ganz-Teleskopen der Fall ist. Ein Nachteil der Teil-Teleskope ist die relativ geringe Friktionsfläche. Sie werden deshalb regelmäßig mit zusätzlichen Friktionsstiften versehen, die sich federnd gegen die Primärkrone legen, um auf diese Weise die Haltewirkung zu erhöhen und zu verlängern. Die Erfahrung zeigt jedoch, daß diese zusätzlichen Friktionsstifte wegen Materialüberlastung oder -ermüdung sehr schnell abbrechen, wenn ihre Länge anatomisch bedingt kürzer als 3 mm sein muß.

Alle drei Arten von Teleskopen müssen vom Zahntechniker individuell angefertigt werden. Eine fabrikmäßige Vorfertigung ist derzeit nicht möglich. Da die Haltewirkung gegenüber den beim Kauen entstehenden Druck- und Zugkräften allein auf der Friktion zwischen Patrize und Matrize beruht, müssen alle Funktionsflächen an Matrize und Patrize zueinander parallel und spielfrei sein. Wegen der Kleinheit der Verbindungselemente muß der Zahntechniker mit miniaturisierten Werkzeugen arbeiten, die dem Arbeitsdruck jedoch federnd ausweichen.

Diese Nachteile der Individualanfertigung von Teleskopen werden um so deutlicher, je geringer die Teleskophöhe sein muß. Teil-Teleskope mit parallelisierter Wandung sind daher bei Höhen unter ca. 4 mm nicht mehr funktionstüchtig.

Hier setzt nun die Erfindung ein und zeigt eine Möglichkeit auf, wie die Vorteile der Ganz-Teleskope und der Teil-Teleskope miteinander kombiniert werden können, speziell für Teleskope mit einer Höhe von weniger als 3 mm.

Diese Aufgabe wird gelöst durch eine Zahnkrone der eingangs genannten Art mit den Merkmalen gemäß Kennzeichen des Anspruchs 1.

Die vorliegende Erfindung geht aus von einer Kronenform, wie sie von den Teil-Teleskopen, speziell den Rillen-Schulter-Teleskopen bekannt ist. Der linguale Anteil der Primärkrone erhält eine Rillen-Schulter-Fräsung, die linguale Zahnform wird durch ein Außenteleskop hergestellt. Auch nach Herausnahme der Prothese bleibt das verblendete Primärteleskop weiterhin sichtbar. Zwischen der zusätzlichen, intracoronalen Nut und der lingualen Funktionsfläche verbleibt ein Kronensteg, den das starre Verbindungselement allseitig teleskopisch umschließt, so daß diesbezüglich die Wirkung eines Ganz-Teleskops erreicht wird. Gleichzeitig verstärkt ein der Nut entsprechender Teleskopsteg das Außenteleskop, so daß dieses über eine erheblich längere Zeitspanne eine hohe Friktion gewährleistet.

Durch die erhöhte Anzahl von Friktionsrillen, in die entsprechende Friktionszylinder am herausnehmbaren Verbindungselement eingreifen, wird die Friktion ebenfalls erhöht, ohne das Einsetzen und Herausnehmen der unbelasteten Prothese zu behindern.

Alle Funktionsflächen können im Prinzip beliebig geformt werden. Es empfiehlt sich jedoch aus Gründen der Vereinfachung, die Stützfläche, gegebenenfalls auch die Funktionsfläche weitestgehend eben zu gestalten.

Die cervikale Stufe erstreckt sich vorzugsweise im Bereich der lingualen Funktionsfläche, kann jedoch ohne weiteres auch in den Bereich der Stützfläche hinein erweitert werden. Die Breite der cervikalen Stufe sollte um so breiter sein, je geringer die Höhe der Parallelflächen zwischen Patrize und Matrize ist. Bei einer Höhe von ca. 3 mm kann die Stufe praktisch verschwinden, bei einer Höhe von 2 mm sollte sie etwa 1 mm breit sein.

Die dem Prothesensattel benachbarte Stützfläche kann einen Winkel von ca. 20 bis 90 Grad zur Kieferkammitte einschließen. Dadurch besteht eine große Freiheit bei der Anpassung an die anatomischen Gegebenheiten des zu versorgenden Gebisses, ohne daß die Funktion darunter leidet.

Gemäß einer bevorzugten Ausgestaltung der Erfindung ist in die Stützfläche eine Rastnut für ein aktives Halteelement eingearbeitet. Ein geeignetes aktives Halteelement ist beispielsweise beschrieben in der EP-A-136 671 des Erfinders. Aktive Halteelemente verhindern, daß sich die unbelastete Prothese von selbst löst. Um das Einsetzen und Herausnehmen der Prothese nicht zu behindern, besitzen sie nur eine relativ geringe Haltekraft und sind deshalb zum Aufnehmen der beim Kauen entstehenden Druck- und Zugkräfte nicht geeignet.

Wie bei den bekannten Ganz-Teleskopen besteht auch bei der vorliegenden Erfindung die Möglichkeit, einzelstehende Restzähne als Pfeiler zur Fixierung der Prothese einzusetzen. Zu diesem Zweck wird gegenüber der ersten Stützfläche benachbart zum zweiten Prothesensattel eine zweite Stützfläche vorgesehen. Dabei kann zur Erhöhung der Friktionswirkung in die lingualen Funktionsfläche eine vierte Friktionsrille eingearbeitet werden.

Wie schon erwähnt, besitzt die intracoronale Nut eine besondere Bedeutung für die vorliegende Erfindung. Um die Friktion der Teleskopverbindung weiter zu erhöhen, empfiehlt es sich, der Nut über ihre Länge wenigstens einen Knick zu geben.

Die Nut selbst beginnt bzw. endet vorteilhafterweise in der Stützfläche.

Der Boden der Nut wird im einfachsten Fall eben ausgebildet. Es besteht jedoch die Möglichkeit, den Boden der Nut in Querrichtung zu neigen, und zwar zur Zunge bzw. Wange hin. Auch kann in eine Wand der Nut eine weitere Friktionsrille eingearbeitet sein.

Gemäß einer bevorzugten Ausgestaltung der Erfindung weist der Boden der Nut jedoch eine Kippstufe auf, auf der sich der Steg des herausnehmbaren Verbindungselementes abstützt. Dabei liegt diese Kippstufe von der Stützfläche aus gesehen hinter der transversalen Zahnmitte. Diese Stufe trägt der Tatsache Rechnung, daß die Haltewirkung zwischen feststehendem und herausnehmbarem Teleskopteil auf der Friktion beruht, die jedoch erst dann voll wirksam wird, wenn sich die beiden Verbindungsteile unter der Wirkung der Kaukräfte gegeneinander verkanten. Es hat sich nun überraschenderweise herausgestellt, daß die Friktion erheblich verbessert werden kann, wenn der Drehpunkt für diese scheinbare Verkantungsbewegung an der angegebenen Stelle, d. h. hinter der transversalen Zahnmitte liegt.

Die Kippstufe kann nicht nur in den Boden der Nut, sondern auch in die Unterseite des in die Nut einzuführenden Steges des lösbaren Sekundärteils eingearbeitet sein.

Es versteht sich, daß zu der erfindungsgemäßen Zahnkrone auch das entsprechende lösbare Verbindungselement gehört. Dieses Verbindungselement kann nun wie in der herkömmlichen Zahnprothetik individuell abgeformt und gefertigt werden.

Etwaige Abweichungen von der Idealform, wie sie bei der herkömmlichen Herstellungstechnik nie ausgeschlossen werden können, sind dank der besonderen Kronenform noch tolerierbar.

Gemäß einer bevorzugten Ausgestaltung der Erfindung ist die Unterseite des Steges, der der intracoronalen Nut entspricht, keilförmig gestaltet, wobei die Spitze des Keils zur Zunge hin gerichtet ist. Dank dieser Ausgestaltung hat der Steg unter der Wirkung der Kaukräfte das Bestreben, sich um seine sagitale Achse zu drehen. Dadurch verkanten sich die Seitenflächen des Steges besonders stark gegenüber den Nutenwandungen, was zu der erwünscht hohen Friktion führt.

Dieser Effekt läßt sich noch dadurch unterstützen, daß die linguale Seitenfläche des Steges leicht konisch ausgebildet wird.

Optimale Genauigkeit d. h. Parallelität aller Funktionsflächen, optimale Maßhaltigkeit und optimale Festigkeit lassen sich erreichen, wenn das lösbare Verbindungselement fabrikmäßig vorgefertigt ist.

Da es nur in relativ seltenen Fällen möglich sein wird, die Primärkrone mit der erfindungsgemäßen Teleskopform fabrikmäßig vorzufertigen, muß dem Zahntechniker die Möglichkeit gegeben werden, die erfindungsgemäße Form mit der erforderlichen Präzision in die von ihm individuell anzufertigende Krone einzuarbeiten. Dies ist möglich unter Verwendung von Keramikkernen, wie sie bei der Fertigung von T-Geschieben teilweise verwendet werden.

Es versteht sich, daß der höchste Rationalisierungseffekt dann erreicht wird, wenn der Querschnitt, nach Möglichkeit jedoch die gesamte Form des Keramikkerns des lösbaren Verbindungselementeteils bzw. der Freiräume in der Zahnkrone entspricht. Zu diesem Zweck muß allerdings der Zahnarzt den Zahnstumpf immer in einer bestimmten Form vorbereiten. Da dies wohl nicht in allen Fällen möglich ist, wird es erforderlich, den Keramikkern an die anatomischen Gegebenheiten des zu versorgenden Gebisses anzupassen.

Hier hat sich nun überraschenderweise herausgestellt, daß es möglich ist, einen Keramikkern, der alle erfindungsgemäßen Bedingungen bezüglich der Funktionsflächen, der Flächenformen und Friktionsrillen erfüllt, als Strangpreßteil herzustellen, von dem entsprechende Abschnitte nach dem Brennen abgelängt und vom Zahntechniker den anatomischen Gegebenheiten entsprechend zugeschliffen werden.

Um die Handhabung zu erleichtern, empfiehlt es sich, an der der Funktionsfläche benachbarten Kernaußenwand wenigstens einen, vorzugsweise zwei Haltezylinder anzuformen. Diese Haltezylinder kann der Zahntechniker am Parallelapparat befestigen und so die korrekte Position während des Modellierens der Primärkrone sicherstellen.

Beim Zuschleifen des Keramikkerns wird vorteilhafterweise so gearbeitet, daß die Haltezylinder den zugeschliffenen Keramikkern gingival, nicht occlusal überragen. Dadurch ist es möglich, den Keramikkern am entsprechend präparierten Kieferabguß abzustützen, ohne daß das Auflegen des Gegenzahns zwecks Kontrolle behindert wird.

Ein Problem bei der Anfertigung von Prothesen und Verbindungselementen ist die Tatsache, daß jeder Zahn anders ist. Um eine Anpassung an unterschiedlich breite Zähne bzw. Zahnstümpfe zu ermöglichen, besteht einerseits die Möglichkeit, mit einer Vielzahl von entsprechend abgestuften Keramikkernen und entsprechenden Verbindungselementeteilen zu arbeiten. Gemäß einer Weiterbildung der Erfindung kann jedoch auf eine solche Technologie verzichtet werden. Hierzu ist am Keramikkern im Bereich zwischen den beiden Haltezylindern wenigstens eine Trennlinie vorgesehen, an der der Keramikkern in zwei Hälften zerlegt werden kann. Muß der Keramikkern geweitet werden zwecks Anpassung an einen breiten Zahnstumpf, werden die beiden Kernhälften mit einem geeigneten Parallelspreizapparat gespreizt. Dabei kann die Lücke zwischen den beiden Kernhälften mit Modellmasse ausgefüllt werden. Es besteht jedoch die Möglichkeit, ohne derartige Modellmasse zu arbeiten und den beim anschließenden Metallguß an dieser Stelle entstehenden Metallsteg nachträglich abzuarbeiten.

Eine alternative Arbeitsweise sieht vor, daß von einem breiten Keramikkern ausgegangen wird, bei dem so viel Material in der Mitte weggeschliffen wird, bis die Anpassung an einen schmalen Zahnstumpf stimmt und die beiden Kernhälften ohne Spalt zusammenpassen.

Anhand der Zeichnung soll die Erfindung in Form von Ausführungsbeispielen näher erläutert werden. Es zeigen:
- Fig. 1: eine erste Zahnkrone in occlusaler Ansicht,
- Fig. 2: eine zweite Zahnkrone in occlusaler Ansicht,
- Fig. 3: ein zur Zahnkrone der Fig. 1 passendes Sekundärteil für eine abnehmbare Prothese in perspektivischer Ansicht,
- Fig. 4: auszugsweise einen transversalen Schnitt durch die Krone der Fig. 1 mit eingesetztem Sekundärteil gemäß Fig. 3,
- Fig. 5: eine occlusale Ansicht auf die Krone der Fig. 1 mit eingesetztem Keramikkern,
- Fig. 6: eine perspektivische Darstellung des Keramikkerns der Fig. 5 im Rohzustand,
- Fig. 7: eine weitere perspektivische Darstellung des Keramikkerns der Fig. 5,
- Fig. 8: eine perspektivische Darstellung des Keramikkerns der Fig. 5, 6 und 7 nach der Fertigstellung durch den Zahntechniker und
- Fig. 9: eine perspektivische Darstellung einer unter Verwendung des Keramikkerns der Fig. 6 bis 8 in Metall gegossenen Zahnkrone auf einem Ausschnitt des Kiefermodells.

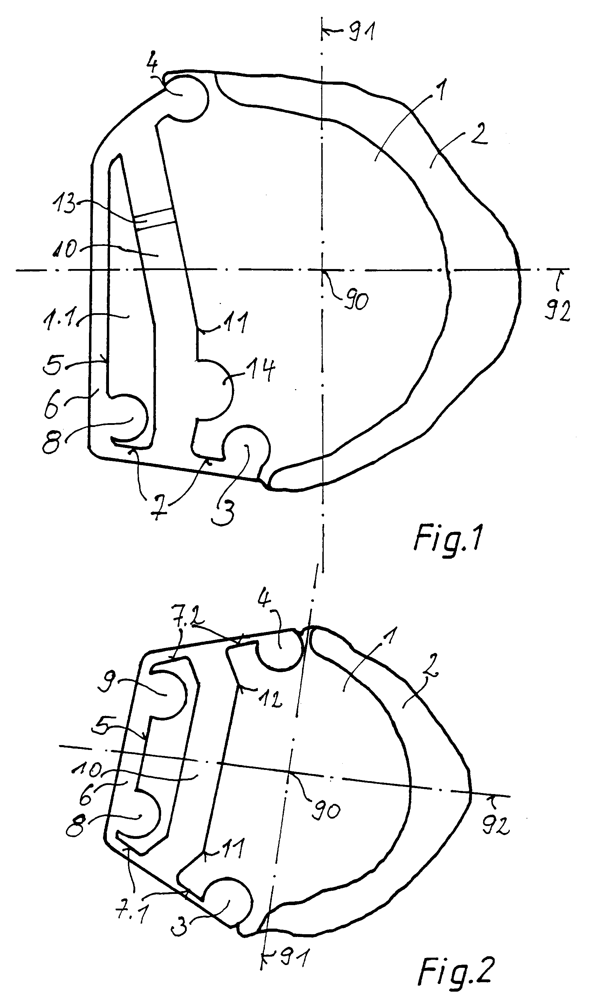

Fig. 1 zeigt eine occlusale Ansicht einer ersten Ausführungsform einer Krone, gestaltet nach den Grundsätzen der vorliegenden Erfindung. Man erkennt die eigentliche Krone 1, aus einer Edelmetall-Legierung gegossen und auf der Sichtseite mit einer Verblendung 2 versehen. Eingezeichnet sind die Zahnmitte 90, die sagitale Mittellinie 91 sowie die transversale Mittellinie 92.
Der Verblendung 2 gegenüberliegend erkennt man eine linguale Funktionsfläche 5, die hier als ebene Fläche ausgebildet ist und unten in einer supragingivalen, cervikalen Stufe 6 endet.

In die Außenseite der Krone 1 sind eine erste Friktionsrille 3 distolingual und eine zweite Friktionsrille 4 mesiolingual eingearbeitet, wie es von den RS-Teleskopen bekannt ist. Eine dritte Friktionsrille 8 ist in die linguale Funktionsfläche 5 eingearbeitet. Aufgabe der Friktionsrillen 3, 4, 8 ist es, die Friktionsfläche zwischen Matrize und Patrize zu vergrößern und die Verkantung sicherzustellen.

Die erste Friktionsrille 3 befindet sich im Bereich einer Stützfläche 7, die ebenfalls der Einfachheit halber als ebene Fläche ausgebildet ist und unten in der supragingivalen Stufe 6 endet. Aufgabe der Stützfläche 7 ist es in erster Linie, die Stützfunktion sowie die Schubverteilungsfunktion zu erbringen.

Falls ein aktives Halteelement vorgesehen werden soll, kann in die Stützfläche 7 eine entsprechende Haltenut eingearbeitet werden.

Von der Stützfläche 7 ausgehend ist durch die Krone 1 eine Nut 10 gearbeitet, die im wesentlichen parallel zu der lingualen Funktionsfläche 5 verläuft und so angeordnet ist, daß die erste und zweite Friktionsrille 3, 4 sich außerhalb der Nut 10 befinden. Zwischen der lingualen Funktionsfläche 5 und der Nut 10 verbleibt ein Kronensteg 1.1, der von der einzusetzenden Patrize nach Art eines geschlossenen, parallelwandigen Teleskops umfaßt wird. Auf diese Weise gelingt es, die erheblichen Vorteile der Ganz-Teleskope, hohe Friktion, gute Schubverteilung, lange Lebensdauer, zu verbinden mit der Vorteile der Teil-Teleskope, erhöhte Ästhetik auch bei abgenommener Prothese.

Zur weiteren Erhöhung der Friktion kann im Bereich der Nut 10 eine weitere Friktionsrille 14 eingearbeitet werden. Derselben Aufgabe dient ein Knick 12 in der Nut 10.

Wie Fig. 1 weiter erkennen läßt, kann der Boden der Nut 10 mit einer Kippstufe 13 ausgerüstet werden. Diese Kippstufe 13 wird von der dem Prothesensattel benachbarten Stützfläche 7 aus gesehen hinter der transversalen Mitte 92 angeordnet. Diese Kippstufe 13 verleiht der in die Krone 1 einzusetzenden Patrize eine definierte Kippachse, um unter der Wirkung der Kaukräfte eine an die Teleskopform optimal angepaßte Flächenpressung und Friktion zwischen Matrize und Patrize zu ermöglichen.

Fig. 2 zeigt ebenfalls in occlusaler Ansicht eine weitere Zahnkrone 1 als Matrize. In diesem Fall sind zwei Stützflächen 7.1, 7.2 vorgesehen. Ein mit einer solchen Zahnkrone 1 versehener Zahnstumpf kann als Pfeiler für eine sich nach beiden Seiten erstreckende Zahnprothese dienen. Zur Erhöhung der Friktion sind in die linguale Funktionsfläche 5 zwei Friktionsrillen 8, 9, in die Nut 10 zwei Knicke 12 eingearbeitet.

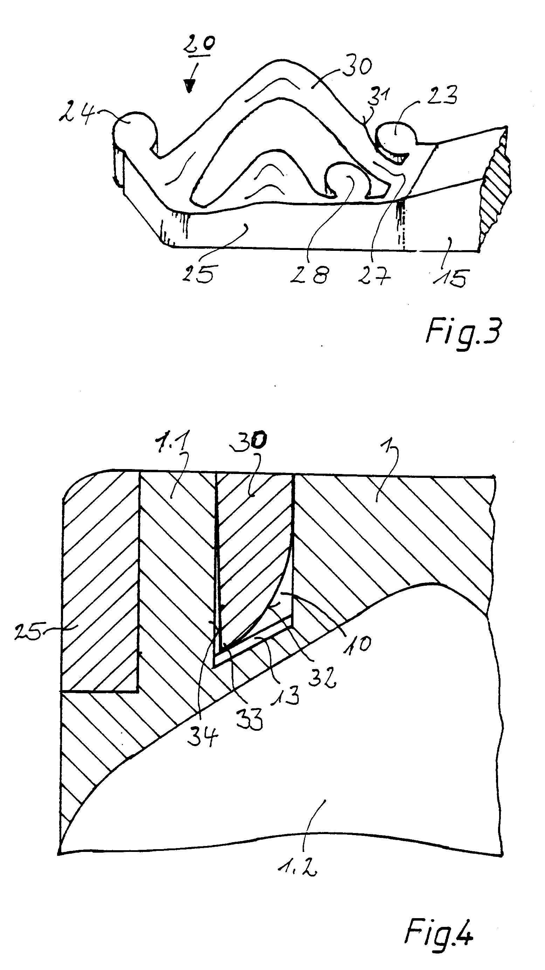

Fig. 3 zeigt in perspektivischer Ansicht die der Zahnkrone 1 der Fig. 1 entsprechende Patrize 20, befestigt an einem Prothesensattel 15. Man erkennt erste, zweite und dritte Friktionszylinder 28, eine linguale Außenteleskopwand 25, eine Stützteleskopwand 27 und von dieser ausgehend einen Patrizensteg 30 mit Stegknick 31. Die Oberseite der Patrize 20 sowie die nicht sichtbare Unterseite sind selbstverständlich an die anatomischen Gegebenheiten des zu versorgenden Gebisses angepaßt.

Dank der Tatsache, daß die ersten und zweiten Friktionszylinder 23, 24 außerhalb des Patrizenstegs 30 angeordnet sind, besteht die Möglichkeit, bei nachlassender Friktion die Patrize 20 durch Nachbiegen der Zylinder 23, 24 zu aktivieren.

Wie die Erfahrung gezeigt hat, kommen die Vorteile der erfindungsgemäßen Patrizen- und Matrizenform dann voll zum Tragen, wenn die Höhe der Teleskopflächen von Patrize und Matrize unter 3 mm liegt. Erst bei derart geringen Höhen muß auch die anhand der Fig. 1 und 2 erläuterte supragingivale cervikale Stufe 6 vorgesehen werden. Deren Breite liegt bei einer Höhe von Patrize und Matrize von ca. 3 mm bei 0 und bei einer Höhe von 2 mm bei ca. 1 mm.

Fig. 4 zeigt einen Querschnitt etwa entlang der transversalen Mittellinie 92 durch die Matrize 1 mit eingesetzter Patrize 20 im Bereich von Außenteleskopwand 25 und Patrizensteg 30.

Man erkennt, wie Außenteleskopwand 25 und Patrizensteg 30 den Kronensteg 1.1 nach Art eines Ganz-Teleskops allseitig umschließen.

Wie Fig. 4 weiter erkennen läßt, ist die Bodenfläche der Nut 10 schräg geneigt. Dies dient einmal zur Anpassung an die übliche Form des Zahnstumpfes, die sich aus der Stumpfhöhle 1.2 ergibt. In Verbindung mit der keilförmigen Ausbildung der Unterseite 32 des Patrizenstegs 30 ergibt sich jedoch ein zusätzlicher Effekt. Unter der Wirkung der Druckkräfte auf die Prothese wird diese auf die Schleimhaut gedrückt. Diese Bewegung überträgt sich auf den Patrizensteg 30, der daraufhin ebenfalls nach unten gedrückt wird. Dabei gleitet die Spitze 33 des so gebildeten Keils in Richtung auf die Zunge, wodurch die Flächenpressung zwischen Steg 30 und den Wänden der Nut 10 erheblich erhöht wird. Dies gilt ganz besonders, wenn wie in der Fig. 4 dargestellt die linguale Fläche 34 des Patrizenstegs 30 leicht konisch verjüngt ist.

Ebenfalls zur Verbesserung der Flächenpressung und damit zur Erhöhung der starren Verbindung zwischen Matrize 1 und Patrize 20 dient die Kippstufe 13 auf dem Boden der Nut 10. Dank dieser Maßnahme wird die scheinbare Kippachse zwischen Patrize 20 und Matrize 1 von der supragingivalen Stufe 6 im Bereich der Stützwand 7 weg auf die Kippstufe 13 verlagert. Dadurch wird die Stützfläche 7 durch die beim Kauen entstehenden Druckkräfte friktionserhöhend belastet und nicht friktionsverringernd entlastet.

Hierbei wird die Erkenntnis verarbeitet, daß der Halt zwischen Patrize 20 und Matrize 1 auch bei einer starren Verbindung, wie es Teleskope sind, allein darauf beruht, daß sich Patrize 20 und Matrize 1 gegeneinander wenigstens minimal bewegen bzw. verkanten, da nur so die Friktion aufgebaut werden kann, die erforderlich ist, um die beim Kauen auf die Prothese und damit letztlich auf das starre Verbindungselement ausgeübten Kräfte aufnehmen zu können.

Diese Ausführungen zeigen, daß für die einwandfreie Funktion der erfindungsgemäßen Teleskopkonstruktion auch bei sehr kleinen Bauhöhen letztlich die Präzision von Matrize und Patrize ausschlaggebend ist. Diese Präzision ließe sich bei einer industriellen Vorfertigung der Teleskopelemente zwar erreichen, dagegem spricht jedoch die Tatsache, daß die zu versorgenden Zähne sehr unterschiedlich sind, so daß nach dem derzeitigen Stand der Technik alleine eine individuelle Anfertigung der Teleskope möglich ist. Hier zeigt nun die vorliegende Erfindung, daß es möglich ist, auch mit industriell vorgefertigten Teleskopen zu arbeiten, wenn die Prinzipien der vorliegenden Erfindung angewendet werden. Hierzu wird dem Zahntechniker nicht nur eine industriell vorgefertigte Patrize geliefert, sondern auch ein exakt dazu passender Keramikkern 50 zur einfachen Herstellung der Matrize bzw. Zahnkrone 1. Keramikkerne sind in der Zahnprothetik bisher nur bekannt bei industriell vorgefertigten Geschieben, beispielsweise T-Geschieben.

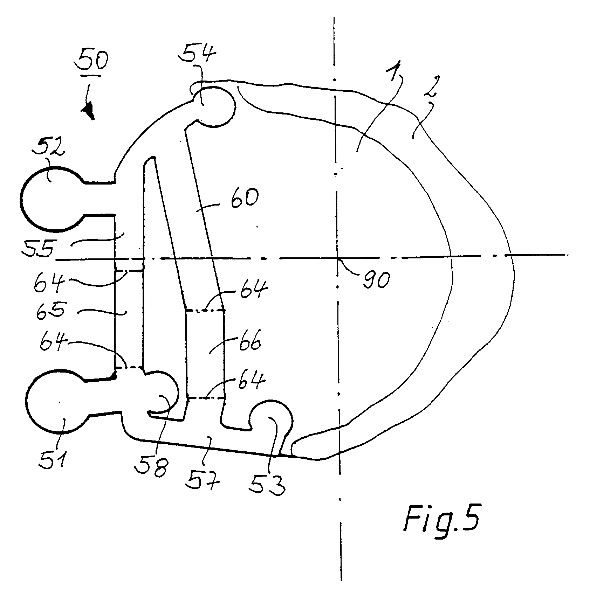

Fig. 5 zeigt in occlusaler Ansicht eine Zahnkrone 1 mit einem derartigen Keramikkern 50, dessen Querschnitt im wesentlichen den Freiräumen der Primärkrone 1 entspricht. Man erkennt erste, zweite und dritte Friktionszylinder 53, 54, 58, eine linguale Kernaußenwand 55, eine Kernstützwand 57 sowie einen Kernsteg 60.

Im Bereich der Kernaußenwand 55 sind zwei Haltezylinder 51, 52 angeformt, deren Funktion anhand der nachfolgenden Figuren noch näher beschrieben wird. Die Form des Keramikkerns 50 ist so, daß er im Strangpreßverfahren hergestellt werden kann, was eine erhebliche Verbilligung ergibt, auch gegenüber den Keramikkernen für T-Geschiebe nach dem Stand der Technik.

Da wie schon erwähnt die zu versorgenden Zähne unterschiedlich sind, muß beispielsweise mit einer großen Zahl von Keramikkernen 50 variierender Breiten gearbeitet werden, was angesichts des relativ geringen Preises grundsätzlich akeptabel wäre. Fig. 5 zeigt jedoch eine andere Lösung. Es besteht die Möglichkeit, einen breiten Keramikkern 50 entlang der Trennlinien 64 aufzuschneiden und die Verlängerungsstücke 65, 66 herauszunehmen, um anschließend die beiden Keramikkernhälften wieder lückenlos zusammensetzen zu können. Alternativ besteht auch die Möglichkeit, ausgehend von einem schmalen Keramikkern 50 entsprechende Verlängerungsstücke 65, 66 einzusetzen, beispielsweise unter Verwendung von Modelliermasse. Schließlich besteht sogar die Möglichkeit, die beiden Kernhälften getrennt an den Zahnstumpf zu modellieren und die beim späteren Metallguß entstehenden Metallstege abzufräsen.

Es versteht sich, daß das Spreizen oder auch Verengen des Keramikkerns 50 mit Hilfe eines Parallelapparates erfolgt, der an den Haltezylindern 51, 52 bequem befestigt werden kann. Im übrigen dient der Parallelapparat in jedem Falle dazu, den Keramikkern 50 in der korrekten Position am Zahnstumpf zu positionieren, wenn der Zahntechniker die Zahnkrone 1 in Wachs modelliert.

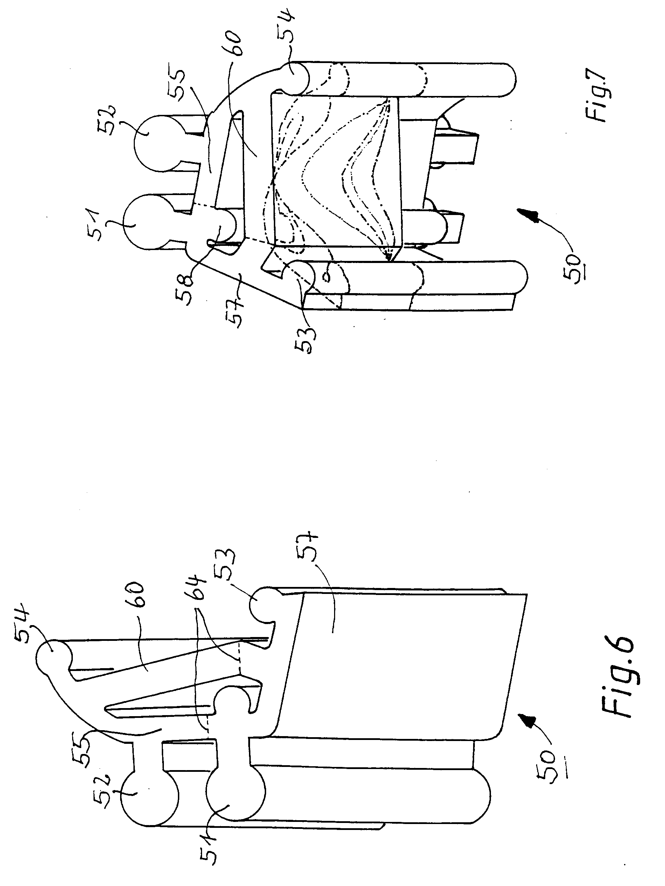

Fig. 6 zeigt den Keramikkern 50 in perspektivischer Darstellung, abgeschnitten von einem stranggepreßten Rohteil. Man erkennt im Vordergrund die Kernstützwand 57 mit erstem Kernzylinder 53 und Kernsteg 60, links die Kernaußenwand 55 mit den angeformten Haltezylindern 51, 52 und im Hintergrund den zweiten Kernzylinder 54. Eingezeichnet sind ebenfalls die Trennlinien 64.

Fig. 7 zeigt eine weitere perspektivische Darstellung des Keramikkerns 50. Mit Hilfe von strichpunktierten Linien ist die endgültige Form dargestellt, die der Zahntechniker aus dem Rohkörper herausarbeiten muß in Anpassung an die anatomischen Gegebenheiten des zu versorgenden Gebisses. Dabei bleiben jedoch die fabrikmäßig vorgeformten Parallelflächen völlig unverändert, so daß auch die in üblicher Weise durch Metallguß hergestellte Zahnkrone 1 diese exakt parallelen und exakt maßgenauen Teleskopflächen besitzt, in die die ebenfalls industriell vorgefertigte Patrize, wie sie in Fig. 3 dargestellt ist, einwandfrei paßt.

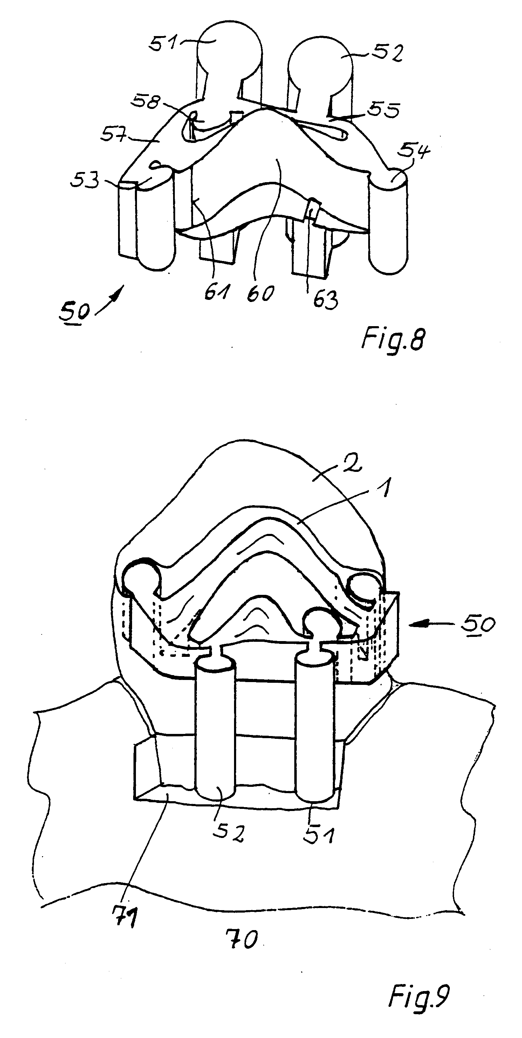

Fig. 8 zeigt den fertig bearbeiteten Keramikkern 50, angepaßt an die anatomischen Gegebenheiten. In der Unterseite des Kernstegs 60 ist ein der Kippstufe 13 entsprechendes Stufennegativ 63 eingearbeitet.

Fig. 9 schließlich zeigt einen Kieferabguß 70 mit aufgesetzter Zahnkrone 1 mit Verblendung 2 und Keramikkern 50. Man erkennt, daß die Haltezylinder 51, 52 unter die Unterkante des Keramikkerns 50 heruntergezogen sind. In den Kieferabguß 70 hat der Zahntechniker einen Ausschnitt 71 geschnitten, auf dessen Boden sich die Haltezylinder 51, 52 abstützen, so daß die Modellierarbeit erheblich erleichtert wird. Aufgrund der Tatsache, daß die Haltezylinder 51, 52 nicht nach oben verlängert sein müssen, besteht jederzeit die Möglichkeit, die exakte Form der Krone 1 durch Auflegen des Gegenzahns zu überprüfen.

Insgesamt ergibt sich aufgrund der vorliegenden Erfindung ein starres Verbindungselement für eine herausnehmbare Zahnprothese, wobei dank industrieller Vorfertigung der für die starre Verbindung relevanten Teile eine Erhöhung der Präzision, eine Verkürzung der Handarbeit, eine Verbesserung der Funktion, eine Verlängerung der Haltbarkeit, eine Erhöhung der Produktsicherheit und eine Vergleichmäßigung der Arbeitsergebnisse erreicht wird, auch bei relativ geringer Qualifikation des Zahntechnikers, und daß es erstmals möglich wird, eine starre Verbindung mit einer Bauhöhe von unter 3 mm herzustellen.

## Patentansprüche

1. Zahnkrone für die Befestigung einer herausnehmbaren Prothese mittels eines starren Verbindungselementes nach Art eines parallelwandigen Teleskops, wobei eine erste und eine zweite Friktionsrille (3, 4), eine sich zwischen den beiden Friktionsrillen (3, 4) erstreckende linguale Funktionsfläche (5) und im Bereich der Funktionsfläche (5) eine supragingivale cervicale Stufe (6) vorgesehen sind, wobei benachbart zum Prothesensattel (15) eine Stützfläche (7) vorgesehen ist, in die die erste Friktionsrille (3) eingearbeitet ist, dadurch gekennzeichnet daß in die linguale Funktionsfläche (5) eine dritte Friktionsrille (8) eingearbeitet ist und daß durch die Zahnkrone (1) hindurch, im wesentlichen parallel zur lingualen Funktionsfläche (5) verlaufend und bezüglich der beiden ersten Friktionsrillen (3, 4) lingual versetzt, eine intrakoronale Nut (10) verläuft.

2. Zahnkrone nach Anspruch 1, dadurch gekennzeichnet, daß die Stufe (6) sich in den Bereich der Stützfläche (7) erstreckt und daß die Stufe (6) um so breiter ist, je niedriger die parallelen Funktionsflächen von Patrize und Matrize sind.

3. Zahnkrone nach Anspruch 1 oder 2, dadurch gekennzeichnet, daß die Stützfläche (7) eben ist und daß die Stützfläche (7) einen Winkel von ca. 20 Grad bis ca. 90 Grad zur Kieferkammitte (91) einschließt.

4. Zahnkrone nach einem der Ansprüche 1 bis 3, dadurch gekennzeichnet, daß in die Stützfläche (7) eine Rastnut für ein aktives Halteelement eingearbeitet ist.

5. Zahnkrone nach einem der Ansprüche 1 bis 4, dadurch gekennzeichnet, daß gegenüber der ersten Stützfläche (7.1) eine zweite Stützfläche (7.2) vorgesehen ist.

6. Zahnkrone nach einem der Ansprüche 1 bis 5, dadurch gekennzeichnet, daß in die linguale Funktionsfläche (5) eine vierte Friktionsrille (9) eingearbeitet ist.

7. Zahnkrone nach einem der Ansprüche 1 bis 6, dadurch gekennzeichnet, daß die linguale Funktionsfläche (5) im wesentlichen eben ist.

8. Zahnkrone nach einem der Ansprüche 1 bis 7, dadurch gekennzeichnet, daß die intracoronale Nut (10) über ihre Länge wenigstens einen Knick (11, 12) aufweist und daß die Nut (10) in der Stützfläche (7, 7.1, 7.2) beginnt bzw. endet.

9. Zahnkrone nach einem der Ansprüche 1 bis 8, dadurch gekennzeichnet, daß der Boden der Nut (10) eine Stufe (13) aufweist und daß die Stufe (13) von der Stützfläche (7) aus gesehen hinter der transversalen Zahnmitte (92) angeordnet ist.

10. Zahnkrone nach einem der Ansprüche 1 bis 9, dadurch gekennzeichnet, daß der Boden der Nut (10) in Querrichtung entweder zur Zunge oder zur Wange hin geneigt ist.

11. Zahnkrone nach einem der Ansprüche 1 bis 10, dadurch gekennzeichnet, daß in eine Wand der Nut (10) eine weitere Friktionsrille (14) eingearbeitet ist.

12. Lösbares Verbindungselement zur Befestigung einer abnehmbaren Prothese an einer Zahnkrone (1) gemäß den Ansprüchen 1 bis 11, dadurch gekennzeichnet, daß die Unterseite (32) des Steges (30), der der intrakoronalen Nut (10) entspricht, keilförmig gestaltet ist, wobei die Spitze (33) des Keils zur Zunge bzw. Wange hin gerichtet ist.

13. Verbindungselement nach Anspruch 12, dadurch gekennzeichnet, daß die der Zunge bzw. Wange zugewandte Seitenfläche (34) des Stegs (30) leicht konisch ausgebildet ist.

14. Keramikkern (50) zur Herstellung einer Zahnkrone (1) nach den Ansprüchen 1 bis 13, dadurch gekennzeichnet, daß sein Querschnitt dem des Verbindungselementes der Ansprüche 12 oder 13 entspricht.

15. Keramikkern nach Anspruch 14, dadurch gekennzeichnet, daß seine Form der der Freiräume in der Zahnkrone (1) entspricht.

16. Keramikkern nach Anspruch 14 oder 15, dadurch gekennnzeichnet, daß er von einem Strangpreßteil abgelängt und den anatomischen Gegebenheiten entsprechend zugeschliffen ist.

17. Keramikkern nach Anspruch 14 oder 15, dadurch gekennzeichnet, daß an der der lingualen Funktionsfläche (5) benachbarten Kernaußenwand (55) wenigstens ein Haltezylinder (51, 52) angeformt ist und daß der Haltezylinder (51, 52) den zugeschliffenen Keramikkern (50) gingival überragt.

18. Keramikkern nach einem der Ansprüche 14 bis 17, dadurch gekennzeichnet, daß im Bereich zwischen den beiden Haltezylindern (51, 52) wenigstens eine Trennlinie (64) vorgesehen ist, um den Keramikkern (50) zur Anpassung an den zu versorgenden Zahn weiten oder verengen zu können.

## Claims

1. Tooth crown for fastening a removable prosthesis by means of a rigid connecting element in the form of a parallel-walled telescope, wherein a first and a second friction groove (3, 4), a lingual functional face (5), which extends between the two friction grooves (3, 4), and, in the region of the functional face (5), a supragingival cervical step (6) are provided, and a support face (7) is provided adjacent to the prosthesis bridge (15), into which face the first friction groove (3) is worked, characterised in that a third friction groove (8) is worked into the lingual functional face (5), and that an intracoronal channel (10) extends through the tooth crown (1), essentially parallel to the lingual functional face (5) and staggered relative to the first two friction grooves (3, 4) with respect to the tongue.

2. Tooth crown according to claim 1, characterised in that the step (6) extends into the region of the support face (7), and that the lower the parallel functional faces of the male piece and the female piece, the wider the step (6).

3. Tooth crown according to claim 1 or 2, characterised in that the support face (7) is plane, and that the support face (7) forms an angle of approximately 20 degrees to approximately 90 degrees with the centre of the jaw crest (91).

4. Tooth crown according to one of claims 1 to 3, characterised in that a detent channel for an active holding element is worked into the support face (7).

5. Tooth crown according to one of claims 1 to 4, characterised in that a second support face (7.2) is provided opposite the first support face (7.1).

6. Tooth crown according to one of claims 1 to 5, characterised in that a fourth friction groove (9) is worked into the lingual functional face (5).

7. Tooth crown according to one of claims 1 to 6, characterised in that the lingual functional face (5) is essentially plane.

8. Tooth crown according to one of claims 1 to 7, characterised in that the intracoronal channel (10) comprises at least one bend (11, 12) over its length, and that the channel (10) begins and ends in the support face (7, 7.1, 7.2).

9. Tooth crown according to one of claims 1 to 8, characterised in that the bottom of the channel (10) comprises a step (13), and that, viewed from the support face (7), the step (13) is disposed after the transverse tooth centre (92).

10. Tooth crown according to one of claims 1 to 9, characterised in that the bottom of the channel (10) is inclined in the transverse direction either towards the tongue or towards the cheek.

11. Tooth crown according to one of claims 1 to 10, characterised in that a further friction groove (14) is worked into a wall of the channel (10).

12. Releasable connecting element for fastening a removable prosthesis to a tooth crown (1) according to claims 1 to 11, characterised in that the underside (32) of the ridge (30), which corresponds to the intracoronal channel (10), is wedge-shaped, the tip (33) of the wedge pointing towards the tongue or cheek.

13. Connecting element according to claim 12, characterised in that the lateral face (34) of the ridge (30) which faces the tongue or cheek is slightly conical.

14. Ceramic core (50) for producing a tooth crown (1) according to claims 1 to 13, characterised in that its cross section corresponds to that of the connecting element of claim 12 or 13.

15. Ceramic core according to claim 14, characterised in that its shape corresponds to that of the free spaces in the tooth crown (1).

16. Ceramic core according to claim 14 or 15, characterised in that it is cut off an extruded part and ground in accordance with the anatomical conditions.

17. Ceramic core according to claim 14 or 15, characterised in that at least one holding cylinder (51, 52) is moulded onto the outer core wall (55) which is adjacent to the lingual functional face (5), and that the holding cylinder (51, 52) projects beyond the ground ceramic core (50) with respect to the gums.

18. Ceramic core according to one of claims 14 to 17, characterised in that at least one parting line (64) is provided in the region between the two holding cylinders (51, 52) in order to be able to widen or narrow the ceramic core (50) so as to adapt to the tooth which is to be treated.

## Revendications

1. Couronne dentaire pour la fixation d'une prothèse dentaire amovible au moyen d'un élément de liaison rigide, à la façon d'un élément télescopique à parois parallèles, une première et une deuxième cannelures de friction (3, 4), une face fonctionnelle linguale (5) s'étendant entre les deux cannelures de friction (3, 4) et, dans la zone de la face fonctionnelle (5) étant prévu un étagement cervical (6) supra-gingival, au voisinage de la selle de prothèse (15) étant prévue une face d'appui (7), dans laquelle est ménagée la première cannelure de friction (3), caractérisée en ce que dans la face fonctionnelle linguale (5) est usinée une troisième cannelure de friction (8) et en ce que dans la couronne dentaire (1), sensiblement parallèlement à la face fonctionnelle linguale (5) et décalée par rapport aux deux premières cannelures de friction (3,4) s'étend une rainure intra-coronale (10).

2. Couronne dentaire selon la revendication 1, caractérisée en ce que l'étagement (6) s'étend dans la zone de la face d'appui (7), et en ce que l'étagement (6) est d'autant plus large que sont basses les faces fonctionnelles parallèles de l'élément mâle et de l'élément femelle de matrice.

3. Couronne dentaire selon la revendication 1 ou 2, caractérisée en ce que la face d'appui (7) est plane et en ce que la face d'appui (7) fait un angle d'à peu près 20° à 90°, par rapport à l'axe de l'os maxillaire (91).

4. Couronne dentaire, selon l'une des revendications 1 à 3, caractérisée en ce qu'une rainure d'encliquetage, destinée à un élément de maintien actif, est ménagée dans la face d'appui 7.

5. Couronne dentaire selon l'une des revendications 1 à 4, caractérisée en ce qu'une deuxième face d'appui (7.2) est prévue à l'opposée de la première face d'appui (7.1).

6. Couronne dentaire selon l'une des revendications 1 à 5, caractérisée en ce qu'une quatrième cannelure de friction (9) est ménagée dans la face fonctionnelle linguale (5).

7. Couronne dentaire selon l'une des revendications 1 à 6, caractérisée en ce que la face fonctionnelle linguale (5) est sensiblement plane.

8. Couronne dentaire selon l'une des revendications 1 à 7, caractérisée en ce que la rainure intra-coronale (10) présente sur toute sa longueur au moins une inflexion (11, 12) et en ce que la rainure (10) commence, respectivement s'achève dans la face d'appui (7, 7.1, 7.2)

9. Couronne dentaire selon l'une des revendications 1 à 8, caractérisée en ce que le fond de la rainure (10) présente un étagement (13) et en ce que, vu de la face d'appui (7), l'étagement (13) est disposé derrière l'axe dentaire transversal (92).

10. Couronne dentaire selon l'une des revendications 1 à 9, caractérisée en ce que le fond de la rainure (10) est incliné dans la direction transversale, soit vers la langue soit vers la joue.

11. Couronne dentaire selon l'une des revendications 1 à 10, caractérisée en ce qu'une autre cannelure de friction (14) est ménagée dans une paroi de la rainure (10).

12. Element de liaison amovible pour assurer la fixation d'une prothèse amovible sur une couronne dentaire (1) selon les revendications 1 à 11 caractérisé en ce que la face inférieure (32) de la nervure (30) qui correspond à la rainure intra-coronale (10) est d'allure cunéiforme, la pointe (33) de l'élément cunéiforme étant orientée vers la langue, respectivement la joue.

13. Élément de liaison selon la revendication 12, caractérisé en ce que la face latérale (34), tournée vers la langue ou la joue, de la nervure (30) est d'allure légèrement conique.

14. Noyau céramique (50) pour la fabrication d'une couronne dentaire (1) selon les revendications 1 à 13, caractérisé en ce que sa section transversale correspond a celle de l'élément de liaison des revendications 12 ou 13.

15. Noyau céramique selon la revendication 14, caractérisé en ce que sa forme correspond à celle des espaces libres ménagés dans la couronne dentaire (1).

16. Noyau céramique selon la revendication 14 ou 15, caractérisé en ce qu'il est obtenu par découpage à partir d'une pièce extrudée et qu'il est meulé de manière à correspondre aux détails anatomiques.

17. Noyau céramique selon la revendication 14 ou 15, caractérisé en qu'est formé sur la paroi extérieure de noyau (55) voisine de la face fonctionnelle linguale (5) au moins un cylindre de maintien (51, 52), et en ce que le cylindre (51, 52) dépasse du noyau céramique (50) meulé à l'endroit de la partie gingivale,

18. Noyau céramique selon l'une des revendications 14 à 17, caractérisé en ce que dans la zone se trouvant entre les deux cylindres de maintien (51, 52) est prévue au moins une ligne de séparation (64), pour pouvoir élargir ou rétrécir le noyau céramique (50) en vue d'obtenir une adaptation à la dent à équiper.
